# EUROPEAN PATENT APPLICATION

(11) **EP 3 751 371 A1**
(43) Date of publication of application: **16.12.2020**
(21) Application number: 19180107.5
(22) Date of filing: 13.06.2019
(51) Int. Cl.: G05B 19/418, G06T 19/00

(54) **ALIGNMENT OF PLANT MODELS IN AUGMENTED REALITY**

(71) Applicant: Siemens Aktiengesellschaft, 80333 München (DE)
(72) Inventor: Bierweiler, Thomas, 76131 Karlsruhe (DE); Labisch, Daniel, 76149 Karlsruhe (DE); MacWilliams, Asa, 82256 Fürstenfeldbruck (DE)

(57) **Abstract**

What is proposed is a method for localizing an augmented reality device within a technical plant, wherein the augmented reality device comprises an optical recognition device for detecting optical information and at least one inertial sensor, comprising the steps of:
a) Determining a position and/or an orientation of the augmented reality device within an arbitrary local coordinate system by means of the optical recognition device and the at least one inertial sensor;
b) Performing recognition of at least one identifier label, in particular textual identifier label, which is inherent to a component being part of the technical plant;
c) Determining an absolute position and/or orientation of the augmented reality device within the technical plant using a virtual map of the technical plant, thereby performing an alignment transformation between the local coordinate system and the virtual map, wherein the virtual map contains a list of at least one identifier label being associated to a component of the technical plant, the list comprising a position of the identifier label within the technical plant.

## Description

The present disclosure is directed to a method for localizing an augmented reality device within a technical plant, wherein the augmented reality device comprises an optical recognition device for detecting optical information and at least one inertial sensor, according to claim 1. Furthermore, the present disclosure is directed to an augmented reality device according to claim 8.

A user can wish to view, create or edit information in augmented reality (AR), which is relevant to a large piece of physical technical infrastructure. Specific examples include:
- Viewing step-by-step workflow information for repairing process automation equipment, using a head-worn augmented reality display, in a chemical or pharmaceutical plant;
- Performing an inspection walkthrough in a technical plant, creating annotations to document potential problems using an augmented reality app on a smartphone.
- Navigation to an asset. The user is guided to an asset using an augmented reality app on a smartphone or AR glasses.

In any case, it is critical that the information in augmented reality is displayed in the right place relative to the real equipment.

Today, different approaches are available for ensuring that the augmented reality information is in the right place. They typically include localization or pose estimation. These include:
- Wide-area RF location technology, e.g. ultrawideband, which can track the position of an augmented reality device to within an accuracy of a few centimeters. This requires either the installation of base stations for tracking, or the measurement of signal strengths of installed field devices' built-in wireless networks, as described e.g. in EP 3 060 964 B1.
- Marker-based optical tracking technology. A camera on the augmented reality device recognizes optical markers which are placed at different positions throughout the plant. Each optical marker is designed to be easily recognizable by image processing techniques. A piece of software on the augmented reality device detects the marker, thus identifying which part of the plant the user is in; and then performs pose estimation based on the perspective in which the marker appears from the devices' camera position. Thus, when a marker is detected, the AR device has a good estimation of exactly where it is within the plant. This technology has the drawback that special, additional markers must be placed at exactly defined locations in the plant.
- Wide-area visual-inertial odometry. For this, the area of the plant is first mapped using an augmented reality device that has a camera and additional inertial/magnetic sensors. The data is gathered to create a (usually sparse) 3D feature map or point cloud of the environment. This can be stored on the AR device itself, or on a server. Later, the AR device uses optical features it detects in its camera image to search the created feature map, and thus deduce its current position. This technology has the drawback that changes in brightness (e.g. due to solar radiation) disturb the quality of recognizing features during location. No matter which location technique is employed, the position and orientation of the AR device and annotations created with it or displayed within it must be registered with a virtual model of the physical plant (or parts of it).

There are two basic techniques for this:
- One large model of the plant. Here, there is a physical model with one coordinate system, and the pose of the AR device, as determined by the tracking technology used above, is mapped into this coordinate system.
- Segmented model of the plant. Here, there are separate and disjunct models of different sections of the plant, each with its own coordinate system. First, the part of the plant that the user is in is identified, and then the pose of the AR device is mapped into that part's coordinate system.

An objective of the present invention is to locate an augmented reality device within a technical plant.

The problem is solved by a method for localizing an augmented reality device within a technical plant according to claim 1. Furthermore, the problem is solved by an augmented reality device according to claim 8. Advantageous aspects of the invention are the subject of the dependent claims.

According to the invention, the method for localizing an augmented reality device within a technical plant, wherein the augmented reality device comprises an optical recognition device for detecting optical information and at least one inertial sensor, comprises the following steps:
a) Determining a position and/or an orientation of the augmented reality device within an arbitrary local coordinate system by means of the optical recognition device and the at least one inertial sensor;
b) Performing recognition of at least one identifier label, in particular textual identifier label, which is inherent to a device being part of the technical plant;
c) Determining an absolute position and/or orientation of the augmented reality device within the technical plant using a virtual map of the technical plant, thereby performing an alignment transformation between the local coordinate system and the virtual map,
   wherein the virtual map contains a list of at least one identifier label being associated to a component of the technical plant, the list comprising a position of the identifier label within the technical plant.

A "technical plant" can be a plant in process industries like a chemical or a pharmaceutical plant. This also includes any plant from the production industry, plants in which e.g. cars or goods of all kinds are produced. Technical plants that are suitable for carrying out the method according to the invention can also come from the field of energy generation. Wind turbines, solar plants or power plants for power generation are also covered by the term of technical plant.

"Augmented reality devices" can be smartphones, tablets, glasses or the like. They are designed for providing additional virtual information to "classical" optical information.

An "optical recognition device" can be a video camera, a photo sensor or the like. It is designed for gathering optical information and making this information available for the augmented reality device as described before.

The identifier label can be a textual label but also a label in form of bar, QR, or other codes. The identifier is associated to a device of the technical plant, i.e. it is a characteristic of this component, providing a clear identification feature. A mapping of the identifier label code and the name of the component in the virtual map is available. The virtual map can just consist of a list of identifier labels together with their position in a global coordinate system of the technical plant.

As already described, it is state of the art to attempt to solve the problem of locating an augmented reality device by using optical marker recognition. This invention solves this problem by using markers that are already in place: the identifier labels in technical plants, in particular textual identifier labels. The invention takes advantage of the fact that (textual) identifier labels are already in place in technical plants but are used for a completely new task. In contrast to other methods or systems, this invention does not require any additional infrastructure or labels to be placed in a technical plant. Therefore, the effort for using augmented reality technology in a technical plant significantly decreases, which is a necessary requirement for making it profitable at all.

More than this, implementing the inventive method requires no wireless communication (e.g. via beacons or WLAN access points). This results in a reduction of implementation effort and in an availability in plant areas with a potentially explosive atmosphere.

After scanning an identifier label, the current position of the augmented reality device is roughly known using at least by means of the optical recognition device and the at least one inertial sensor. Additionally, magnetometers or radiofrequency location techniques can be used to estimate a position and/or orientation and/or movement of the augmented reality device roughly.

The virtual map of the technical plant which is used for the orientation and/or positioning of the augmented reality device can be stored on the augmented reality device itself and/or on an external server.

The augmented reality device can store results of the alignment transformation as described before locally and/or on an external server. This way, the augmented reality device (or other compatible devices) will be able to re-initialize its position upon a subsequent visit to the same part of the technical plant, accurately, without having to scan as many identifier labels (potentially even without scanning any identifier labels at all).

In a preferred embodiment of the invention, within step a) as described before a SLAM using visual-inertial odometry is performed. SLAM means "simultaneous location and mapping". With the help of SLAM the problem of constructing a map of an unknown environment (around the augmented reality device) while simultaneously keeping track of a location of the augmented reality device within it is solved efficiently. Compared to wide-scale visual-inertial odometry, this method/system does not require the entire plant to be mapped out or scanned first. Again, this involves a high effort and, in addition, the visual odometry of technical plants is challenging as cylindric pipes create varying reflections depending on the light situation.

Preferably, the virtual map is a three-dimensional model which has been created as part of a planning phase of the technical plant. Usually, a complete three-dimensional model of the technical plant is created during an engineering phase. This three-dimensional model can then be used as map of the technical plant. Only little additional effort is necessary to deploy the three-dimensional model for the described use cases.

In a further preferred embodiment of the invention the virtual map comprises a plurality of virtual map parts which can be used on their own to determine the position and/or orientation of the augmented reality device within the technical plant. This reduces the amount of data needed for the virtual map of the technical plant.

The problem as described above is also solved by an augmented reality device, comprising an optical recognition device for detecting optical information and at least one inertial sensor, which is designed for:
a) Determining a position and/or an orientation of the augmented reality device within an arbitrary local coordinate system by means of the optical recognition device and the at least one inertial sensor;
d) Performing recognition of at least one identifier label, in particular textual identifier label, which is inherent to a component being part of the technical plant;
e) Determining an absolute position and/or orientation of the augmented reality device within the technical plant using a virtual map of the technical plant, thereby performing an alignment transformation between the local coordinate system and the virtual map,
   wherein the virtual map contains a list of at least one identifier label being associated to a component of the technical plant, the list comprising a position of the identifier label within the technical plant.

Within step a) a SLAM using visual-inertial odometry can be performed.

The virtual map can be stored on the augmented reality device and/or on an external server.

The virtual map can be a three-dimensional model which has been created as part of a planning phase of the technical plant.

The virtual map can comprise a plurality of virtual map parts which can be used on their own to determine the position and/or orientation of the augmented reality device within the technical plant.

The augmented reality device can store results of the alignment transformation as described above locally and/or on an external server.

Features of examples of the present disclosure will become apparent by reference to the following description.

An augmented reality device according to the invention is used in a process plant to display additional augmented reality information. At first, a SLAM software being implemented on the augmented reality device is initializing itself and determines an arbitrary local coordinate system. Typically, this coordinate system also will have a canonical "up" vector based on local gravity, and it may additionally have a canonical ground plane height based on detection of the floor level. The local coordinate system may also have a canonical "north" vector based on a compass, but this is typically not very accurate in industrial environments.

A camera (optical recognition device) of the augmented reality device is directed at an arbitrary textual identifier label of a component of the process plant. The augmented reality device recognizes the textual identifier label and looks up the position of this textual identifier label in a virtual map of the process plant. The recognition of the label can be triggered either by image processing by itself or can be triggered manually by the user.

Afterwards, the augmented reality device determines a three-dimensional position of the textual identifier label in the local SLAM coordinate system.

Then, the camera is directed at another textual identifier label, which is some distance away from the first. Again, the augmented reality device recognizes the textual identifier label and looks up the position of this textual identifier label in the virtual map of the technical plant. After that, the augmented reality device determines the three-dimensional position of the textual identifier label in the local SLAM coordinate system.

From this point onwards, the augmented reality device can calculate an alignment transformation between the augmented reality device's SLAM coordinate system and the virtual map of the process plant, based on the two pointwise correspondences between textual identifier labels in the two coordinate systems. For this, a numeric optimization technique is used. The exact technique depends on the dimensionality of the input data and the degrees of freedom of the alignment transformation (see below).

The augmented reality device now displays the appropriate augmented reality content in the right place. In order to improve the accuracy of the alignment, the user may scan additional textual identifier labels. With each additional label detected, the device can recompute a better transformation.

The dimensionality of the input data, and the degrees of freedom of the alignment transformation, affect the exact details of the calculation. Possible situations in real industrial applications are:
- North vector, up vector, scale, and ground height known: alignment transformation has 2 degrees of freedom, and each scanned label provides 2 useful input values => at least one scanned label is necessary.
- Up vector, ground height and scale known: alignment transformation has 3 degrees of freedom, and each scanned label provides 2 useful input values => at least two scanned labels are necessary.
- Up vector and scale known: alignment transformation has 4 degrees of freedom, and each scanned label provides 3 useful input values => at least two scanned labels are necessary.
- Only scale known: alignment transformation has 6 degrees of freedom, and each scanned label provides 3 useful input values => at least two scanned labels are necessary.
- Scale also unknown: alignment transformation has 7 degrees of freedom, and each scanned label provides 3 useful input values => at least three scanned labels are necessary.

Furthermore, if certain parameters such as north vector, up vector, ground height, and scale are known in principle, but may be inaccurate, they can be re-estimated after a larger number of labels have been scanned. If, the number of input values exceeds the degrees of freedom, the accuracy of the map can be estimated. In general, it decreases with the distance to the scanned labels. Hence, it is possible to estimate the accuracy and ask the user for scanning new labels as she moves through the process plant.

A deviation of each (textual) identifier label from the virtual map can be used to detect discrepancies between a real plan and the virtual map. Scanning significant more labels than necessary for the alignment, the deviation should be small for all of them. If there is one or some with a significantly higher deviation, this indicates an error in the virtual map or a wrong textual identifier label.

While several examples have been described in detail, it is to be understood that the disclosed examples may be modified. Therefore, the foregoing description is to be considered non-limiting.

## Claims

1. A method for localizing an augmented reality device within a technical plant, wherein the augmented reality device comprises at least one optical recognition device for detecting optical information and at least one inertial sensor, comprising the steps of:
a) Determining a position and/or an orientation of the augmented reality device within an arbitrary local coordinate system by means of the optical recognition device and the at least one inertial sensor;
b) Performing recognition of at least one identifier label, in particular textual identifier label, which is inherent to a component being part of the technical plant;
c) Determining an absolute position and/or orientation of the augmented reality device within the technical plant using a virtual map of the technical plant, thereby performing an alignment transformation between the local coordinate system and the virtual map,
wherein the virtual map contains at least a list of at least one identifier label being associated to a component of the technical plant, the list comprising a position of the identifier label within the technical plant.

2. A method according to claim 1, wherein within step a) of claim 1 a SLAM using visual-inertial odometry is performed.

3. A method according to one of the preceding claims, wherein the virtual map is stored on the augmented reality device.

4. A method according to one of the preceding claims, wherein the virtual map is stored on an external server.

5. A method according to one of the preceding claims, wherein the virtual map is a three-dimensional model which has been created as part of a planning phase of the technical plant.

6. A method according to one of the preceding claims, wherein the virtual map comprises a plurality of virtual map parts which can be used on their own to determine the position and/or orientation of the augmented reality device within the technical plant.

7. A method according to one of the preceding claims, wherein the augmented reality device stores results of the alignment transformation according to claim 1 locally and/or on an external server.

8. An augmented reality device, comprising an optical recognition device for detecting optical information and at least one inertial sensor, which is designed for:
a) Determining a position and/or an orientation of the augmented reality device within an arbitrary local coordinate system by means of the optical recognition device and the at least one inertial sensor;
b) Performing recognition of at least one identifier label, in particular textual identifier label, which is inherent to a component being part of the technical plant;
c) Determining an absolute position and/or orientation of the augmented reality device within the technical plant using a virtual map of the technical plant, thereby performing an alignment transformation between the local coordinate system and the virtual map,
wherein the virtual map contains a list of at least one identifier label being associated to a component of the technical plant, the list comprising a position of the identifier label within the technical plant.

9. An augmented reality device according to claim 8, wherein within step a) of claim 1 a SLAM using visual-inertial odometry is performed.

10. An augmented reality device according to claim 8 or 9, wherein the virtual map is stored on the augmented reality device.

11. An augmented reality device according to claim 8 or 9, wherein the virtual map is stored on an external server.

12. An augmented reality device according to one of claims 8 through 11, wherein the virtual map is a three-dimensional model which has been created as part of a planning phase of the technical plant.

13. An augmented reality device according to one of claims 8 through 12, wherein the virtual map comprises a plurality of virtual map parts which can be used on their own to determine the position and/or orientation of the augmented reality device within the technical plant.

14. An augmented reality device according to one of claims 8 through 13, wherein the augmented reality device stores results of the alignment transformation according to claim 8 locally and/or on an external server.
